# EUROPÄISCHE PATENTSCHRIFT

(11) **EP 1 516 215 B1**
(45) Veröffentlichungstag und Bekanntmachung des Hinweises auf die Patenterteilung: **26.12.2012**
(21) Anmeldenummer: 03724764.0
(22) Anmeldetag: 30.05.2003
(51) Int. Cl.: G02B 6/38

(54) **STECKERTEIL FÜR EINE OPTISCHE STECKVERBINDUNG UND VERFAHREN ZUM VERBINDEN EINES STECKERTEILS MIT DEM ENDE EINES LICHTWELLENLEITERKABELS**
CONNECTOR-PLUG PART FOR AN OPTICAL PLUG-IN CONNECTION AND METHOD FOR CONNECTING A CONNECTOR-PLUG PART TO THE END OF AN OPTICAL WAVEGUIDE CABLE
ELEMENT DE CONNEXION POUR RACCORDEMENT OPTIQUE ET PROCEDE POUR RACCORDER UN ELEMENT DE CONNEXION A L'EXTREMITE D'UN CABLE A FIBRES OPTIQUES

(30) Priorität: 24.06.2002 CH 108402
(43) Veröffentlichungstag der Anmeldung: 23.03.2005
(73) Patentinhaber: Diamond SA, 6616 Losone (CH)
(72) Erfinder: DE MARCHI, Silverio, CH-6612 Ascona (CH)
(74) Vertreter: Hepp Wenger Ryffel AG
(86) Internationale Anmeldenummer: PCT/CH2003/000338
(87) Internationale Veröffentlichungsnummer: WO 2004/001471

(56) Entgegenhaltungen:
- EP-A- 0 864 888
- EP-A- 1 074 869
- EP-A2- 0 413 548
- WO-A-96/31795
- US-A- 5 818 993

## Beschreibung

Die Erfindung betrifft ein Steckerteil für eine optische Steckverbindung gemäss dem Oberbegriff von Anspruch 1. Die Hauptaufgabe des Steckerteils besteht ersichtlicherweise darin, eine zugfeste Verbindung zwischen dem Steckerstift und dem Lichtwellenleiterkabel zu gewährleisten. Dabei sollte eine Montage auch unter feldmässigen Bedingungen möglich sein.

Aus der WO 02/16989 ist ein Steckerteil mit einen zweiteiligen Stechesgehäuse bekannt geworden. Das Gehäuse besteht aus einen ersten Gehäuseteil, in dem ein Steckerstrift mit Lichtwellen leitern gehalten ist. Das zweite Gehäuseteil ist als separates Dechel ausgestaltet, des durch eine Schwenkbewegung mit den ersten Gehäuseteil vesrastbar ist.

EP 1 074 869 A1 zeigt einen Steckverbinder für Plastic Optical Fiber, welcher ein Steckerteil aufweist mit einem Führungselement im Innern eines Gehäuses. Das Führungselement nimmt eine Plastic Optical Fiber mit ihrem Mantel auf und führt die Faser beim Steckvorgang in eine Hülse eines Adapters. Der Steckverbinder weist auf seiner Rückseite einen Klemmmechanismus auf, welcher durch ein Verklemmen des Mantels der Plastic Optical Fiber diese im Steckverbinder festhält. Der Klemmmechanismus besteht aus zwei Klemmelementen, welche mit einem Filmscharnier am Gehäuse des Steckverbinders befestigt sind. Durch geeignete Konturen auf der dem Mantel der Faser oder dem Kabel zugeordneten Seite der Klemmelemente wird der Mantel der Faser oder das Kabel festgehalten.

In US 5,818,993 wird ein Steckverbinder gezeigt, welcher an seinem kabelseitigen Ende über einen Klemmmechanismus verfügt zum Festhalten eines Lichtwellenleiterkabels. Der Klemmmechanismus verfügt über zwei Klemmelemente, welche mit einem Gelenkstift am Verbindergehäuse befestigt sind. Die Klemmelemente sind mit Schaumgummipuffer bestückt, welche auf das Lichtwellenleiterkabel gedrückt werden. Das Verbindergehäuse weist weiter einen Steckerstift auf, welcher eine Faser eines Lichtwellenleiterkabels aufnimmt. Nach dem Verklemmen des Lichtwellenleiterkabels zwischen den Klemmelementen kann eine Hülse über den Klemmmechanismus geschoben werden, so dass sich der Klemmmechanismus nicht lösen kann.

EP0413548 offenbart ein Steckerteil für eine optische Steckverbindung, mit einem Steckerstift, einem Lichtwellenleiterstummel, einer hülsenartigen Stifthalterung mit Stiftaufnahmeabschnitt und Kabelaufnahmeabschnitt, einem an einem Gelenk schwenkbaren Mantelteil. Die Teile eines mechanischen Spleisses umhüllen das kabelseitige Ende des Lichtleiterstummels.

Es bestehen grundsätzlich zwei Möglichkeiten, wie ein Lichtwellenleiterkabel an ein Steckerteil angeschlossen wird. Das Lichtwellenleiterkabel kann als sogenannter Pigtail bereits werkseitig mit dem Steckerteil konfektioniert werden, so dass lediglich noch das Ende des Pigtails durch eine Schweissverbindung an ein Netz angeschlossen werden muss. Alternativ kann jedoch werkseitig auch nur ein Faserstummel in den Steckerstift eingesetzt werden, wobei die Schweissung mit dem Lichtwellenleiterkabel unmittelbar am Steckerteil erfolgt. Für letztere Methode geeignete Steckerteile sind beispielsweise in der WO96/31795 oder in der EP 864 888 beschrieben. Zum Ansetzen der Schweisselektroden sind dabei spezielle Öffnungen oder Aussparungen vorgesehen.

Ein Nachteil bei der bekannten Schweisstechnik am Faserstummel besteht darin, dass die Schweissstelle selbst schwer zugänglich ist und dass auch eine Beobachtung des Schweissvorgangs erschwert ist. Es ist daher eine Aufgabe der Erfindung, ein Stekkerteil der eingangs genannten Art zu schaffen, das besonders für die Schweisstechnik am Faserstummel geeignet ist, wobei die Schweissoperation selbst möglichst ungehindert und bei guten Sichtbedingungen durchgeführt werden kann. Sowohl die Vormontage, als auch die Endmontage des Steckerteils sollen dabei schnell und ohne aufwendige Hilfsmittel durchführbar sein.

Diese Aufgabe wird erfindungsgemäss mit einem Steckerteil gelöst, das die Merkmale im Anspruch 1 aufweist. Der Steckerstift selbst kann dabei unabhängig von seiner Lagerung oder Beschaffenheit im Stiftaufnahmeabschnitt vormontiert werben. Das am als Filmscharnier ausgebildeten Gelenk ausschwenkbare Mantelteil ermöglicht auf besonders einfache Weise eine Freilegung und damit eine Zugänglichkeit der Schweissstelle am Faserstummel. In bestimmten Fällen könnte das schwenkbare Mantelteil aber auch im Zusammenhang mit der Konfektionierung von Pigails vorteilhaft sein.

Besonders vorteilhaft besteht die gesamte Stifthalterung aus wenigstens zwei Schalenteilen, die entlang der Längsmittelachse zusammensetzbar sind, wobei jedes Schalenteil ein schwenkbares Mantelteil aufweist. Die Schalenteile lassen sich einfach herstellen und können um den Steckerstift geschlossen werden. Es wäre aber selbstverständlich auch denkbar, die Stifthalterung zumindest im Bereich des Stiftaufnahmeabschnitts einstückig auszubilden.

Die schwenkbaren Mantelteile können gesamthaft den Kabelaufnahmeabschnitt bilden und am Gelenk mit dem Stiftaufnahmeabschnitt verbunden sein. Alternativ wäre es aber auch denkbar, dass das schwenkbare Mantelteil sich nur über eine Teillänge des Kabelaufnahmeabschnitts erstreckt.

Herstellungstechnisch ergeben sich besondere Vorteile, wenn die Stifthalterung aus zwei identischen Schalenteilen besteht, die auf einer durch die Längsmittelachse verlaufenden Ebene zusammensetzbar sind. Auf diese Weise müssen nicht unterschiedliche Typen von Schalenteilen hergestellt werden, weil die Stifthalterung mit zwei identischen Schalenteilen zusammenbaubar ist.

Für die Verbindung benachbarter Schalenteile können an ihren Berührungsflächen ineinandergreifende Vorsprünge und Ausnehmungen, insbesondere konische Zapfen und Zapfenöffnungen vorgesehen sein. Je nach der gewählten Konizität können die beiden Schalenteile durch leichten Druck zusammengefügt werden. Da die Stifthalterung in der Regel noch in ein Steckergehäuse eingesetzt werden muss, ist es besonders zweckmässig, wenn wenigstens ein konischer Abschnitt auf der Aussenseite der Stifthalterung vorgesehen ist, welcher in eine korrespondierende Konusaufnahme am Steckergehäuse einpressbar ist.

Die Stifthalterung besteht vorteilhaft aus einem Kunststoffmaterial, wobei das Gelenk ein Filmscharnier ist. Ersichtlicherweise kann derart im Spritzgiessverfahren das schwenkbare Mantelteil einstückig mit den übrigen Teilen ausgebildet werden. Bei richtiger Wahl des Kunststoffs und bei richtiger Dimensionierung lässt sich eine ausreichende mechanische Belastbarkeit des Filmscharniers erreichen, ohne dass die Gelenkeigenschaften beeinträchtigt werden.

Bei optischen Steckverbindungen ist es üblich, dass zur Aufrechterhaltung einer dämpfungsfreien Lichtübertragung unter verschiedenen mechanischen Bedingungen der Steckerstift axial vorgespannt ist. Im vorliegenden Fall kann der Steckerstift unter axialer Federvorspannung begrenzt verschiebbar im Stiftaufnahmeabschnitt gelagert sein. Alternativ ist es aber auch denkbar, dass der Steckerstift fest im Stiftaufnahmeabschnitt gehalten ist und dass am Kabelaufnahmeabschnitt wenigstens ein axial federnder Bereich vorgesehen ist. Eine vergleichbare Lösung ist beispielsweise auch in der eingangs erwähnten EP 864 888 beschrieben.

Für die verschiebbare Lagerung des Steckerstifts ist es zweckmässig, wenn auf der Innenseite wenigstens eines Schalenteils im Bereich des Stiftaufnahmeabschnitts eine Rippe angeordnet ist, welche derart in eine Aussparung im Aussenmantel des Steckerstifts eingreift, dass sein Federweg begrenzt ist und dass er drehfest gehalten ist. Die Vorspannung kann mit einer Schraubendruckfeder erzielt werden, welche im Stiftaufnahmeabschnitt einerseits an einem Widerlager und andererseits am rückwärtigen Teil des Steckerstifts abgestützt ist.

Eine besonders optimale Arbeitsweise im feldmässigen Einsatz ergibt sich, wenn das Steckerteil als vormontierte Einheit zum Anschliessen an das Ende eines Lichtwellenleiterkabels vorbereitet wird. Dabei wird im Steckerstift ein Lichtwellenleiterstummel derart befestigt, dass sein abisoliertes kabelseitiges Ende innerhalb des Schwenkbereichs des Mantelteils liegt, wobei das Mantelteil oder die Mantelteile in einer wenigstens teilweise geöffneten Position gehalten ist bzw. sind. Die Fixierung und Zentrierung des Lichtwellenleiterstummels kann auf unterschiedliche, an sich bereits bekannte Methoden erfolgen. Die Längendimensionierung innerhalb des Schwenkbereichs der Mantelteile stellt sicher, dass im feldmässigen Einsatz nicht noch nachträglich abgelängt werden muss, sondern dass die vorgesehene Schweissstelle am richtigen Ort innerhalb der Stifthalterung liegt. Eine vollständige Schliessung der Mantelteile ist nicht erwünscht, da diese nur schwer wieder zu öffnen sind. Die Mantelteile müssen daher wenigstens soweit in Öffnungsstellung gehalten werden, dass die konischen Zapfen nicht eingreifen können. In einer derartigen Position wäre auch der Faserstummel ausreichend geschützt. Die Mantelteile können aber auch bereits soweit aufgeschwenkt werden, wie dies für den späteren Schweissprozess nötig ist, beispielsweise um 90° zur Längsmittelachse. In einem derartigen Fall kann eine Schutzkappe vorgesehen werden, welche den herausragenden Faserstummel schützt und gegebenenfalls auch die Mantelteile in Öffnungsstellung hält.

Die Erfindung betrifft auch ein Verfahren zum Verbinden eines Steckerteils mit dem Ende eines Lichtwellenleiterkabels, welcher Verfahren die Merkmale im Anspruch 13 aufweist. Gegenüber der konventionellen Schweisstechnik mit einer Schweissung innerhalb des Steckerstifts bzw. innerhalb der Stifthalterung können beim erfindungsgemässen Verfahren die zu schweissenden Leiterenden sehr präzise aufeinander zentriert werden. Das Ansetzen der Schweissvorrichtung erfolgt ohne jede Behinderung und die Schweissstelle kann ausserdem optimal beobachtet werden. Nach dem Schweissvorgang brauchen die Mantelteile lediglich zusammengeschnappt zu werden, wobei noch eine zugfeste Verkrimpung mit dem Kabelmantel erfolgt.

Nach der Schweissung kann die Schweissstelle mit einem Schutzelement ummantelt werden. Dieses kann entweder bereits vorher auf den Lichtwellenleiter aufgeschoben werden und wird dann nach der Schweissung lediglich noch axial verschoben. Alternativ könnte das Schutzelement auch derart ausgebildet sein, dass es nach der Schweissung aufgesetzt werden kann. Um für derartige Manipulationen Platz zu schaffen ist es zweckmässig, wenn nach der Schweissung die Stifthalterung und das Kabelende im eingespannten Zustand vom Zentrierblock entfernt, insbesondere angehoben wird. Dabei genügen ersichtlicherweise bereits wenige Zentimeter.

Nachstehend wird auch noch eine Vorrichtung zur Durchführung des Verfahrens beschrieben. Die Einspannung der Stifthalterung bzw. des Kabelendes und die Ausrichtung der zu verbindenden Lichtwellenleiterenden in einer v-förmigen Zentriernut gewährleisten eine sehr präzise Schweissverbindung. Die Ausnehmung am Zentrierblock im Bereich der vorgesehenen Schweissstelle ermöglicht eine gute Zugänglichkeit bzw. Belüftung der Schweissstelle Die Hubvorrichtung zum Anheben der Einspannmittel könnte im hinblick auf den sehr geringen Hub auch manuell betätigt werden.

Weitere Vorteile und Einzelmerkmale der Erfindung ergeben sich aus der nachstehenden Beschreibung eines Ausführungsbeispiels und aus den Zeichnungen. Es zeigen:
- Figur 1:: eine perspektivische Darstellung mit den Einzelteilen eines Steckerteils vor der Vormontage,
- Figur 2:: das Steckerteil gemäss Figur 1 mit eingesetztem Stekkerstift,
- Figur 3:: das Steckerteil gemäss Figur.2 nach der Vormontage,
- Figur 4:: eine perspektivische Darstellung einer Vorrichtung zur Durchführung des Schweissverfahrens in zwei verschiedenen Arbeitspositionen,
- Figur 5:: eine perspektivische Darstellung eines Steckerteils nach dem Schweissvorgang und vor dem Schliessen der Schalenteile,
- Figur 6:: das Steckerteil gemäss Figur 5 nach dem Konfektionieren mit dem Kabel,

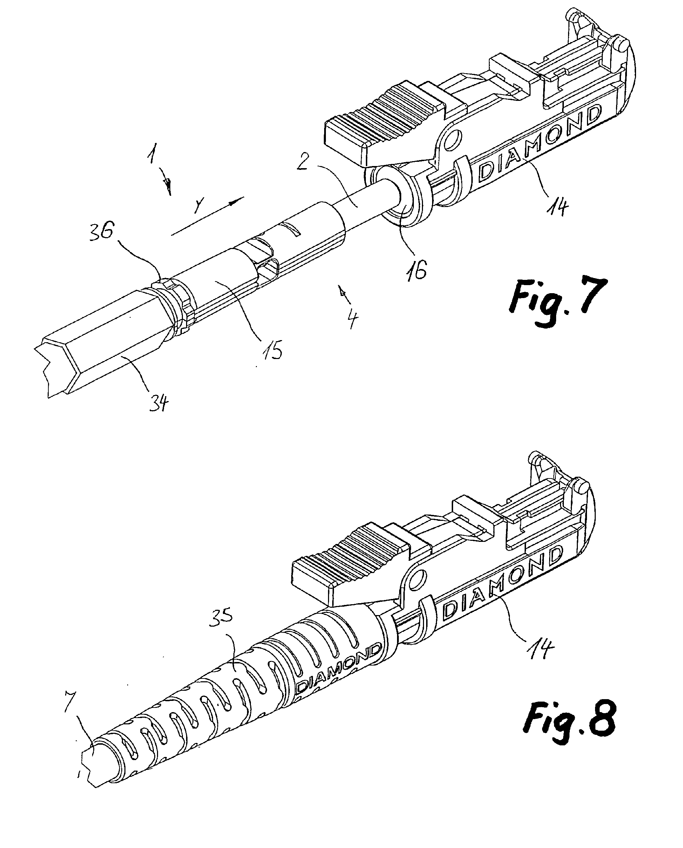

- Figur 7:: das Steckerteil gemäss Figur 6 vor dem Einführen in ein Steckergehäuse und,
- Figur 8:: eine perspektivische Darstellung eines fertig montierten Steckers.

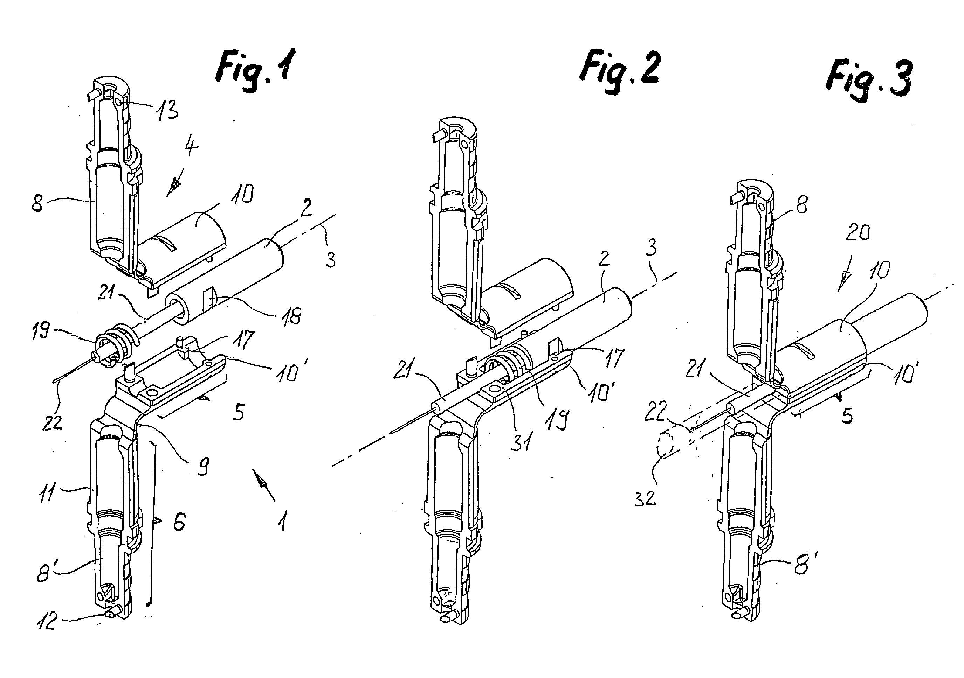

Gemäss Figur 1 besteht ein gesamthaft mit 1 bezeichnetes Stekkerteil im Wesentlichen aus einer gesamthaft mit 4 bezeichneten Stifthalterung und einem Steckerstift 2 aus einem in der Regel sehr harten Material wie z.B. Keramik oder Hartmetall. Die Stifthalterung selbst besteht wiederum aus zwei Schalenteilen 10, 10', welche auf einer durch eine Längsmittelachse 3 verlaufende Ebene zusammensetzbar sind. Schliesslich ist die Stifthalterung 4 (im geschlossenen Zustand) unterteilt in einen Stiftaufnahmeabschnitt 5 und einen Kabelaufnahmeabschnitt 6.

Die beiden Schalenteile 10, 10' bestehen beispielsweise aus Kunststoffmaterial, wobei sie aus spritzgiesstechnischen Gründen vorzugsweise in der gestreckten Lage gespritzt werden. Beide Schalenteile sind völlig identisch. Für die gegenseitige Verbindung sind an den gemeinsamen Berührungsflächen 11 konische Zapfen 12 bzw. korrespondierende Zapfenöffnungen 13 vorgesehen. Durch die hermaphroditische Anordnung dieser Verbindungsmittel kann die hülsenartige Stifthalterung 4 aus einem einzigen Typ der Schalenteile hergestellt werden.

Beim vorliegenden Ausführungsbeispiel bildet jedes Schalenteil 10, 10' über die gesamte Länge des Kabelaufnahmeabschnitts 6 je ein Mantelteil 8, 8', das mit einem Filmscharnier 9 mit dem Stiftaufnahmeabschnitt 5 verbunden ist. Die Mantelteile lassen sich dabei problemlos um 90° zur Längsmittelachse 3 ausschwenken.

Der Steckerstift 2 ist an seinem Aussenmantel mit zwei planparallelen Aussparungen 18 versehen. Ein Paar korrespondierende Rippen 17 auf der Innenseite des Stiftaufnahmeabschnitts 5 greifen in diese Aussparungen, wobei ein bestimmter Federweg in Richtung der Längsmittelachse 3 zugelassen ist. Eine Schraubendruckfeder 19 sorgt für die nötige axiale Vorspannung.

Beim Ausführungsbeispiel gemäss Figur 1 ist bereits ein Lichtwellenleiterstummel 21 fest mit dem Steckerstift 2 verbunden bzw. in diesem zentriert. Dieser Stummel verfügt über ein blankes, abisoliertes Ende 22.

Gemäss Figur 2 ist der Steckerstift 2 am Schalenteil 10' in die dazu vorgesehene Aufnahme eingelegt. Die Schraubendruckfeder 90 stützt sich dabei an einem Widerlager 31 ab, so dass der Stekkerstift 2 in seine äusserste Lage vorgespannt ist, wo er durch die Rippe 17 begrenzt wird. Das Widerlager 31 hat eine Durchlassöffnung für den Faserstummel 21.

Gemäss Figur 3 sind die beiden Schalenteile 10, 10' im Bereich des Stiftaufnahmeabschnitts 5 zusammengeschnappt, während die beiden Mantelteile 8, 8' um 90° abgewinkelt sind, so dass der Faserstummel 21 frei liegt. Zum Schutz des Faserstummels kann eine Schutzkappe 32 auf diesen aufgesteckt sein. Die gesamte Anordnung bildet eine vormontierte Einheit 20, wie sie werkseitig für den feldmässigen Einsatz vorbereitet werden kann.

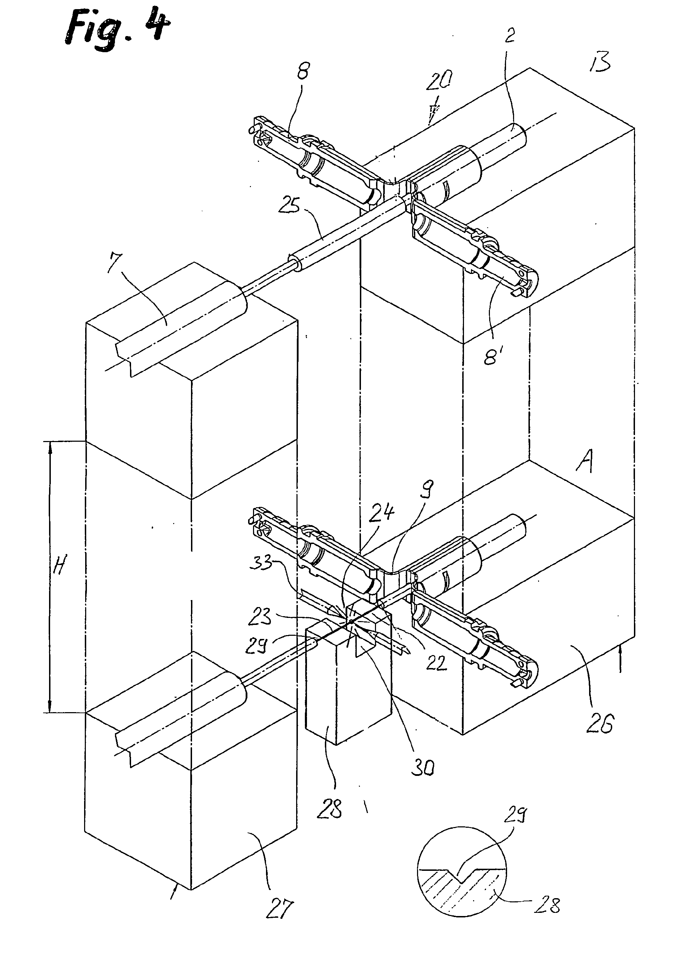

An Hand von Figur 4 wird die Verbindung einer vormontierten Einheit 20 mit dem Ende eines Lichtwellenleiterkabels 7 dargestellt. Die dazu vorgesehene Vorrichtung ist in den beiden Arbeitspositionen A und B dargestellt. Sie besteht im Wesentlichen aus einem ersten Einspannmittel 26 und einem im Abstand dazu angeordneten zweiten Einspannmittel 27. Dazwischen ist ein Zentrierblock 28 mit einer v-förmigen Zentriernut 29 angeordnet. Die Zentriernut ist im Bereich der vorgesehenen Schweissstelle 24 mit einer Ausnehmung 30 versehen. Diese Ausnehmung ermöglicht es, das Schweisselektroden 33 oder andere geeignete Schweissvorrichtungen wie Laserköpfe usw. an die Schweissstelle herangeführt werden können.

Zunächst wird die vormontierte Einheit 20 am ersten Einspannmittel 26 eingespannt. Das gleiche geschieht mit dem Lichtwellenleiterkabel 7, das am zweiten Einspannmittel 27 fixiert wird. In der v-Nut 29 liegen sich die blanken Leiterenden 22 und 23 gegenüber. Durch Aktivieren der Schweisseinrichtung 33 erfolgt eine Verschmelzung der Leiterenden.

Als nächstes erfolgt ein simultanes Anheben des ersten und des zweiten Einspanmmittels 26 bzw. 27 um den Hub H in die zweite Arbeitsposition B. Dabei kann es sich beispielsweise um 20mm handeln. In dieser angehobenen Position gelangt ersichtlicherweise die Schweissstelle ausserhalb des Bereichs der Zentriernut 29 bzw. der Schweissvorrichtung 33. Jetzt kann die Schweissstelle mit einem Schutzelement 25 abgedeckt werden.

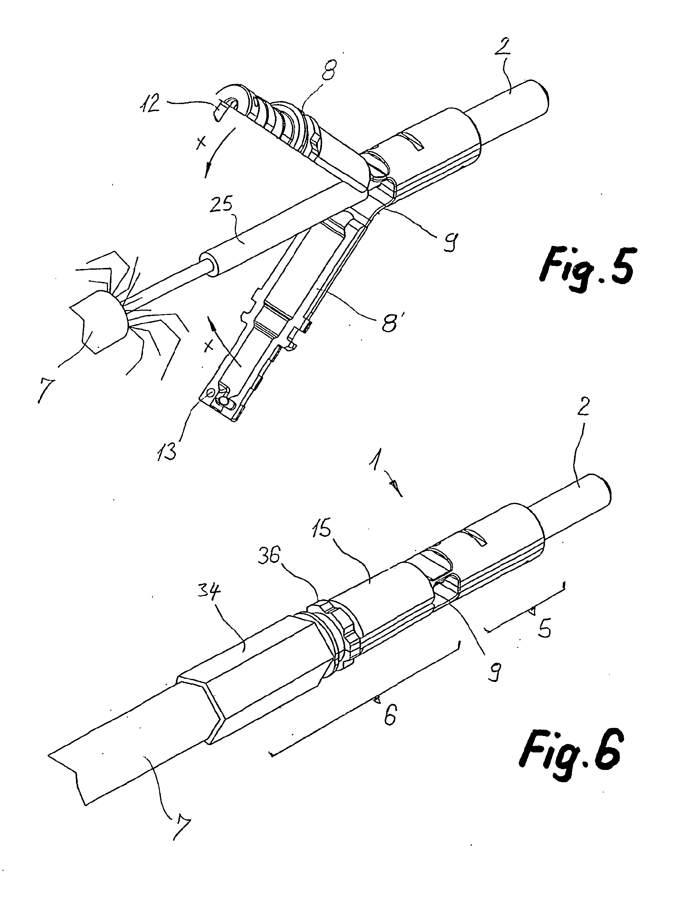

Eine derart vorbereitete Einheit nach dem Schweissvorgang ist in Figur 5 dargestellt. Die beiden Mantelteile 8, 8' werden jetzt vorsichtig in Pfeilrichtung x zusammengeschwenkt und dann zusammengeschnappt. Der letzte Vorgang ist das Aufbringen einer Krimphülse 34 gemäss Figur 6. Diese dient der eigentlichen Zugentlastung, weil sie die Kräfte am Kabelaussenmantel auf das Steckerteil 1 überträgt.

Für die Handhabung der optischen Steckverbindung ist in den meisten Fällen noch ein Steckergehäuse 14 erforderlich, das in eine korrespondierende Steckerbuchse eingerastet werden kann. Einzelheiten derartiger Stecker sind dem Fachmann bekannt und werden hier nicht näher beschrieben.

Für den Einsatz des Steckerteils 1 in das Steckergehäuse 14 ist die Stifthalterung 4 an ihrem Aussenmantel mit einem konischen Abschnitt 15 versehen. Das Steckerteil wird in Pfeilrichtung Y in das Steckergehäuse 14 eingeführt, wobei der konische Abschnitt 15 in eine Konusaufnahme 16 im Steckergehäuse eingepresst wird. Am Aussenmantel sind ausserdem Positioniermittel 36 für die radiale Positionierung des Steckerteils im Steckergehäuse 14 vorgesehen. Zuletzt wird ein Knickschutz 35 am Steckergehäuse befestigt, welcher verhindert, dass das Kabel 7 in einem unzulässigen Biegeradius abgeknickt wird.

## Patentansprüche

1. Steckerteil (1) für eine optische Steckverbindung, mit einem Steckerstift (2) und einem im Steckerstift (2) befestigten und sich über eine Längsmittelachse (3) erstreckenden Lichtwellenleiterstummel (21) und mit einer hülsenartigen Stifthalterung (4) mit einem Stiftaufnahmeabschnitt (5), in dem der Steckerstift gehalten ist und mit einem Kabelaufnahmeabschnitt (6), an dem das Ende eines Lichtwellenleiterkabels (7) zugfest fixierbar ist, wobei der Kabelaufnahmeabschnitt (6) wenigstens ein Mantelteil (8) und ein Gelenk (9) aufweist und dass das Mantelteil an diesem Gelenk (9) um einen bestimmten Schwenkwinkel zwischen einer Öffnungsstellung und einer Schliessstellung schwenkbar ist, wobei das abisolierte kabelseitige Ende (22) des Lichtwellenleiterstummels (21) innerhalb des Schwenkbereiches des Mantelteils (8) liegt, **dadurch gekennzeichnet, dass** das Gelenk als Filmscharnier ausgebildet ist, und in der Öffnungsstellung das abisolierte kabelseitige Ende (22) des Lichtwellenleiterstummels (21) frei liegt.

2. Steckerteil nach Anspruch 1, **dadurch gekennzeichnet, dass** die Stifthalterung (4) aus wenigstens zwei Schalenteilen (10, 10') besteht, die entlang der Längsmittelachse (3) zusammensetzbar sind, wobei jedes Schalenteil ein schwenkbares Mantelteil aufweist.

3. Steckerteil nach Anspruch 2, **dadurch gekennzeichnet, dass** die Mantelteile gesamthaft den Kabelaufnahmeabschnitt (6) bilden und am Gelenk mit dem Stiftaufnahmeabschnitt verbunden sind.

4. Steckerteil nach Anspruch 2 oder 3, **dadurch gekennzeichnet, dass** die Stifthalterung (4) aus zwei identischen Schalenteilen (10, 10`) besteht, die auf einer durch die Längsmittelachse (3) verlaufenden Ebene zusammensetzbar sind.

5. Steckerteil nach einem der Ansprüche 2 bis 4, **dadurch gekennzeichnet, dass** benachbarte Schalenteile an ihren Berührungsflächen 11 ineinandergreifende Vorsprünge und Ausnehmungen, insbesondere konische Zapfen (12) und Zapfenöffnungen (13) aufweisen.

6. Steckerteil nach einem der Ansprüche 1 bis 5, **dadurch gekennzeichnet, dass** zur Sicherung der Stifthalterung (4) in einem Steckergehäuse (14) wenigstens ein konischer Abschnitt (15) auf der Aussenseite der Stifthalterung vorgesehen ist, der in eine korrespondierende Konusaufnahme (16) am Steckergehäuse einpressbar ist.

7. Steckerteil nach einem der Ansprüche 1 bis 6, dadurch gekerinzeichnet, dass die Stifthalterung aus einem Kunststoffmaterial besteht.

8. Steckerteil nach einem der Ansprüche 1 bis 7, **dadurch gekennzeichnet, dass** der Steckerstift (2) unter axialer Federvorspannung begrenzt verschiebbar im Stiftaufnahmeabschnitt (5) gelagert ist.

9. Steckerteil nach einem der Ansprüche 1 bis 7, **dadurch gekennzeichnet, dass** der Steckerstift (2) fest im Stiftaufnahmeabschnitt (5) gehalten ist und dass am Kabelaufnahmeabschnitt (6) wenigstens ein axial federnder Bereich vorgesehen ist.

10. Steckerteil nach Anspruch 2 und Anspruch 8, **dadurch gekennzeichnet, dass** auf der Innenseite wenigstens eines Schalenteils (10) im Bereich des Stiftaufnahmeabschnitts (5) eine Rippe (17) angeordnet ist, welche derart in eine Aussparung (18) im Aussenmantel des Steckerstifts (2) eingreift, dass sein Federweg begrenzt ist und dass er drehfest gehalten ist.

11. Steckerteil nach Anspruch 8 oder Anspruch 10, **dadurch gekennzeichnet, dass** der Steckerstift (2) im Stiftaufnahmeabschnitt (5) mittels einer Schraubendruckfeder (19) vorgespannt ist.

12. Steckerteil nach einem der Ansprüche 1 bis 11, **dadurch gekennzeichnet, dass** das Mantelteil oder die Mantelteile in einer wenigstens teilweise geöffneten Position gehalten ist bzw. sind.

13. Verfahren zum Verbinden eines Steckerteils (1) nach einem der Ansprüche 1 bis 12 mit dem Ende eines Lichtwellenleiterkabels (7), **dadurch gekennzeichnet,**
- **dass** die Stifthalterung (4) und das Kabelende derart eingespannt werden, dass das blanke Leiterende (22) des Lichtwellenleiterstummels (21) und das blanke Leiterende (23) des Lichtwellenleiters am Kabelende koaxial auf einem Zentrierblock (28) einander gegenüber liegen,
- **dass** die blanken Leiterenden miteinander verschweisst werden,
- **dass** anschliessend das Mantelteil oder die Mantelteile in die Schliessstellung geschwenkt wird bzw. werden,
- und **dass** das Kabelende zugfest mit dem Kabelaufnahmeabschnitt (6) verbunden wird.

14. Verfahren nach Anspruch 13, **dadurch gekennzeichnet, dass** nach der Schweissung die Schweissstelle mit einem Schutzelement (25) ummantelt wird.

15. Verfahren nach Anspruch 13 oder 14, **dadurch gekennzeichnet, dass** nach der Schweissung die Stifthalterung (4) und das Kabelende im eingespannten Zustand vom Zentrierblock (28) entfernt, insbesondere angehoben wird.

## Claims

1. Connector-plug part (1) for an optical plug-in connection, with a connector-plug pin (2) and an optical waveguide stub (21) fastened in the connector-plug pin (2) and extending over a longitudinal center axis (3) and with a sleeve-like pin holder (4) with a pin receiving section (5), in which the connector-plug pin is held, and with a cable receiving section (6), to which the end of an optical waveguide cable (7) can be fixed in a tension-resistant manner, the cable receiving section (6) having at least one cladding part (8) and a joint (9), and in that the cladding part (8) can be pivoted at this joint (9) by a certain pivoting angle between an open position and a closed position, the stripped end (22) on the cable side of the optical waveguide stub (21) lying within the pivoting region of the cladding part (8), **characterized in that** the joint is formed as a film hinge, and the stripped end (22) on the cable side of the optical waveguide stub (21) is exposed in the open position.

2. Connector-plug part according to Claim 1, **characterized in that** the pin holder (4) comprises at least two shell parts (10, 10'), which can be fitted together along the longitudinal center axis (3), each shell part having a pivotable cladding part.

3. Connector-plug part according to Claim 2, **characterized in that** the cladding parts altogether form the cable receiving section (6) and are connected to the pin receiving section at the joint.

4. Connector-plug part according to Claim 2 or 3, **characterized in that** the pin holder (4) comprises two identical shell parts (10, 10') which can be fitted together on a plane running through the longitudinal center axis (3).

5. Connector-plug part according to one of Claims 2 to 4, **characterized in that** neighboring shell parts have on their contacting surfaces (11) projections and clearances which engage in one another, in particular conical lugs (12) and lug openings (13).

6. The connector-plug part according to one of Claims 1 to 5, **characterized in that**, to secure the pin holder (4) in a connector-plug housing (14), at least one conical section (15), which can be pressed into a corresponding conical receptacle (16) on the connector-plug housing, is provided on the outside of the pin holder.

7. Connector-plug part according to one of Claims 1 to 6, **characterized in that** the pin holder consists of a plastic material.

8. Connector-plug part according to one of Claims 1 to 7, **characterized in that** the connector-plug pin (2) is mounted with limited displaceability in the pin receiving section (5) under axial spring prestressing.

9. Connector-plug part according to one of Claims 1 to 7, **characterized in that** the connector-plug pin (2) is fixedly held in the pin receiving section (5) and **in that** at least one axially resilient region is provided on the cable receiving section (6).

10. The connector-plug part according to Claim 2 and Claim 8, **characterized in that** a rib (17) which engages in a clearance (18) in the outer circumferential surface of the connector-plug pin (2) in such a way that its resilient displacement is limited and that it is held in a rotationally fixed manner is arranged on the inside of at least one shell part (10), in the region of the pin receiving section (5).

11. Connector-plug part according to Claim 8 or Claim 10, **characterized in that** the connector-plug pin (2) is prestressed in the pin receiving section (5) by means of a helical compression spring (19).

12. Connector-plug part according to one of Claims 1 to 11, **characterized in that** the cladding part or the cladding parts is or are kept in an at least partly opened position.

13. Method for connecting a connector-plug part (1) according to one of Claims 1 to 12 to the end of an optical waveguide cable (7), **characterized**
- **in that** the pin holder (4) and the cable end are clamped in such a way that the bare conductor end (22) of the optical waveguide stub (21) and the bare conductor end (23) of the optical waveguide at the cable end lie coaxially opposite each other on a centering block (28),
- **in that** the bare conductor ends are welded to each other,
- **in that** subsequently the cladding part or the cladding parts is or are pivoted into the closed position,
- and **in that** the cable end is connected to the cable receiving section (6) in a tension-resistant manner.

14. Method according to Claim 13, **characterized in that**, after the welding, the welded location is enclosed with a protective element (25).

15. Method according to Claim 13 or 14, **characterized in that**, after the welding, the pin holder (4) and the cable end are removed, in particular raised, from the centering block (28) in the clamped state.

## Revendications

1. Elément de connexion (1) pour raccordement optique, comprenant une broche de connexion (2) et un bout de guide d'onde optique (21) fixé dans la broche de connexion (2) et s'étendant sur un axe médian longitudinal (3) et comprenant une fixation de broche (4) en forme de douille avec une portion de réception de broche (5) dans laquelle est maintenue la broche de connexion et comprenant une portion de réception de câble (6) sur laquelle l'extrémité d'un câble à fibre optique (7) peut être fixée de manière résistant à la traction, la portion de réception de câble (6) présentant au moins une partie d'enveloppe (8) et une articulation (9), et la partie d'enveloppe pouvant pivoter au niveau de cette articulation (9) suivant un angle de pivotement déterminé, entre une position d'ouverture et une position de fermeture, l'extrémité isolée côté câble (22) du bout de guide d'onde optique (21) se situant à l'intérieur de la région pivotante de la partie d'enveloppe (8), **caractérisé en ce que** l'articulation est réalisée sous forme de charnière à film, et dans la position d'ouverture, l'extrémité isolée côté câble (22) du bout de guide d'onde optique (21) est exposée.

2. Elément de connexion selon la revendication 1, **caractérisé en ce que** la fixation de broche (4) se compose d'au moins deux parties de coque (10, 10'), qui peuvent être assemblées le long de l'axe médian longitudinal (3), chaque partie de coque présentant une partie d'enveloppe pivotante.

3. Elément de connexion selon la revendication 2, **caractérisé en ce que** les parties d'enveloppe forment ensemble la portion de réception de câble (6) et sont connectées à la portion de réception de broche au niveau de l'articulation.

4. Elément de connexion selon la revendication 2 ou 3, **caractérisé en ce que** la fixation de broche (4) se compose de deux parties de coque identiques (10, 10'), qui peuvent être assemblées sur un plan s'étendant à travers l'axe médian longitudinal (3).

5. Elément de connexion selon l'une quelconque des revendications 2 à 4, **caractérisé en ce que** des parties de coque adjacentes présentent, au niveau de leurs surfaces de contact 11, des saillies et des évidements venant en prise les uns dans les autres, en particulier des tourillons coniques (12) et des ouvertures de tourillons (13).

6. Elément de connexion selon l'une quelconque des revendications 1 à 5, **caractérisé en ce que** pour fixer la fixation de broche (4) dans un boîtier de connexion (14), au moins une portion conique (15) est prévue sur le côté extérieur de la fixation de broche, laquelle peut être pressée dans un évidement conique correspondant (16) sur le boîtier de connexion.

7. Elément de connexion selon l'une quelconque des revendications 1 à 6, **caractérisé en ce que** la fixation de broche se compose d'un matériau en plastique.

8. Elément de connexion selon l'une quelconque des revendications 1 à 7, **caractérisé en ce que** la broche de connexion (2) est montée de manière déplaçable dans une mesure limitée dans la portion de réception de broche (5) sous précontrainte de ressort axiale.

9. Elément de connexion selon l'une quelconque des revendications 1 à 7, **caractérisé en ce que** la broche de connexion (2) est retenue fixement dans la portion de réception de broche (5) et **en ce qu'**au moins une région axialement élastique est prévue sur la portion de réception de câble (6).

10. Elément de connexion selon la revendication 2 et la revendication 8, **caractérisé en ce que**, sur le côté intérieur d'au moins une partie de coque (10) dans la région de la portion de réception de broche (5) est disposée une nervure (17) qui vient en prise dans un évidement (18) dans l'enveloppe extérieure de la broche de connexion (2) de telle sorte que sa course de ressort soit limitée et qu'elle soit maintenue de manière solidaire en rotation.

11. Elément de connexion selon la revendication 8 ou la revendication 10, **caractérisé en ce que** la broche de connexion (2) est précontrainte au moyen d'un ressort de compression hélicoïdal (19) dans la portion de réception de broche (5).

12. Elément de connexion selon l'une quelconque des revendications 1 à 11, **caractérisé en ce que** la partie d'enveloppe ou les parties d'enveloppe est ou sont maintenue(s) dans une position au moins partiellement ouverte.

13. Procédé de connexion d'un élément de connexion (1) selon l'une quelconque des revendications 1 à 12 à l'extrémité d'un câble à fibre optique (7), **caractérisé en ce que**
- la fixation de broche (4) et l'extrémité de câble sont serrées de telle sorte que l'extrémité de conducteur dénudée (22) du bout de guide d'onde optique (21) et l'extrémité de conducteur dénudée (23) du guide d'onde optique à l'extrémité du câble sont coaxialement en regard l'une de l'autre sur un bloc de centrage (28),
- les extrémités dénudées de conducteur sont soudées l'une à l'autre,
- ensuite la partie d'enveloppe ou les parties d'enveloppe sont pivotées dans la position de fermeture,
- et l'extrémité de câble est connectée de manière résistant à la traction à la portion de réception de câble (6).

14. Procédé selon la revendication 13, **caractérisé en ce qu'**après le soudage, le point de soudage est enrobé d'un élément de protection (25).

15. Procédé selon la revendication 13 ou 14, **caractérisé en ce qu'**après le soudage, la fixation de broche (4) et l'extrémité de câble sont enlevées du bloc de centrage (28) dans l'état serré, notamment sont soulevées.
